# EUROPEAN PATENT SPECIFICATION

(11) **EP 3 333 001 B1**
(45) Date of publication and mention of the grant of the patent: **18.09.2019**
(21) Application number: 16760642.5
(22) Date of filing: 03.08.2016
(51) Int. Cl.: B60K 17/36, B60K 23/08, B60K 17/02, B60K 17/22, F16D 11/14, F16D 25/061, F16D 11/00

(54) **SHAFT CONNECTION FOR A VEHICLE**
VERBINDUNG VON WELLEN FÜR EIN FAHRZEUG
CONNEXION D'ARBRES POUR UN VÉHICULE

(30) Priority: 03.08.2015 BR 102015018592
(43) Date of publication of application: 13.06.2018
(73) Proprietor: Iveco S.p.A., 10156 Torino (IT)
(72) Inventor: DE LEMOS, José Francivaldo Pereira, 35700-187 Sete Lagoas - MG (BR)
(74) Representative: Bongiovanni, Simone
(86) International application number: PCT/BR2016/050182
(87) International publication number: WO 2017/020108

(56) References cited:
- WO-A1-2015/080722
- US-A- 6 079 539
- US-A1- 2015 027 245

## Description

### FIELD OF THE INVENTION

In general the invention refers to a shaft for an automotive vehicle and, more specifically, the invention is related to a drive shaft of an automotive vehicle that allows its coupling and uncoupling in order to allow the selection of the vehicle traction.

### BACKGROUND OF THE INVENTION

Automotive vehicles and, in particular, vehicles intended to transport goods by road, such as trucks, are generally driven by their rear axles having a powertrain consisting of the engine and the gearbox, mounted in the front portion of the vehicle. The coupling between the powertrain and the driven wheels is achieved by an axle, commonly called a Cardan axis, that is connected on one side to the powertrain outlet, generally the gearbox, and on the other side, it is connected to the differential axis, in order to drive the wheels.

In the case of road transport vehicles with two rear axles and, more particularly, in the case of truck tractors with two rear axles, the vehicles may have a 6x2 or 6x4 drivetrain configuration, meaning that only two of the six wheels of the vehicle are driven, generally the two wheels of the first rear axle, or the four wheels of the two rear axles are driven. In some applications, vehicles configured for "off road" purposes may also have an 8x4 drivetrain configuration or even a 6x6 or 8X8 drivetrain configuration.

The use of at least two driven axles, such as in a 6x4 configuration, may be desired for both legal reasons (in some countries such as Brazil wherein for carrying a higher load, or for application issues, as is the case of vehicles to be used off road, as is the case in sugarcane plantations or mining operations, the vehicle is required to have a 6x4 drivetrain configuration.

However when a vehicle is unloaded, it may be desirable to stop the use of an axle, in order to save fuel and reduce tire wear. If the drivetrain configuration is, for example, a 6x2 configuration, one of the rear axles, the non-driven one, may be raised, thus reducing fuel consumption and tire wear through a technical solution already widely known, in which, an air cushion is used to raise the axle, thus making use of the compressed air line existing in these types of vehicles.

However, this solution cannot be used in vehicles with, for example, a 6x4 or 8x4 drivetrain configuration, considering that a driven axle cannot be raised, as the power for said raised axle would be lost.

Consequently, there is a need to enable the coupling or uncoupling of the drivetrain for at least one axle of a vehicle, in particular a cargo vehicle such as a truck or truck tractor.

The prior art offers solutions that allow the automatic or manual selection of a drivetrain for one or more axles. One known solution consists in coupling or uncoupling the central differential gear train that sends power to the axle. However, this solution cannot be applied with 6x4 or 8x4 drivetrain configurations as no central differential is generally used, but driving power is sequentially transmitted from one differential to the other by means of a Cardan axis.

Other more elaborate solutions, such as those disclosed in the prior art document US 2012/0260758 in the name of Arai, make use of more complex resources such as multiple disk-clutches and electronic controls. Such solutions are complex and expensive, and may not function properly with very high torques, such as, those required for goods transport vehicles, having an output torque of an engine that can easily exceed 1500 Nm and can even reach 3000 Nm. A shaft coupling according to the preamble of claim 1 is known from US 2015/027245 A1. Other known solutions are disclosed in documents US6079539 A or WO2015080722 A1.

Consequently the need is felt, for a simple technical solution that can be used without the need for electronic controls for coupling or uncoupling the drivetrain to/from a shaft of a vehicle, in particular a goods transport vehicle that adopts a 6x4, 8x4 or similar drivetrain configuration. This invention aims to overcome these technical drawbacks of the prior art, among others.

Therefore, an aim of this invention is to provide a means for allowing the drivetrain to be uncoupled from at least one shaft, in particular on a goods transport vehicle with a 6x4 or 8x4 drivetrain configuration.

An additional aim of the invention is to provide a means for uncoupling the Cardan axis of the vehicle, in particular a goods transport vehicle with a 6x4 or 8x4 drivetrain configuration.

### SUMMARY OF THE INVENTION

In order to achieve the aforementioned aims, among others, the invention refers to a shaft coupling and to a vehicle according to the appended set of claims.

### BRIEF DESCRIPTION OF THE DRAWINGS

The invention will now be described in relation to particular embodiments, with reference to the appended Figures. These Figures are schematic and their dimensions or proportions may not be to scale, but are instead designed to offer an explanatory description of an exemplificative non-limiting embodiment, and does not impose limitations to the invention, other than those defined in the appended Claims, wherein:
Figure 1 is a schematic side view of a cargo vehicle, such as a truck, with a 6x4 drivetrain configuration;
Figure 2 is a perspective view of a shaft coupling, according to one embodiment of the invention;
Figure 3 is a cross-section side view following the line A-A of a shaft coupling, according to one embodiment of the invention shown in Figure 1, in a configuration wherein power is transmitted through the coupling;
Figure 4 is the same side view as shown in Figure 3, but in an uncoupled configuration wherein power is not transmitted by the coupling;
Figure 5 is an exploded perspective view of the shaft coupling, according to one embodiment of the invention shown in Figures 2 to 4;
Figure 6 is an exploded side view of the coupling shown in Figures 2 to 4;
Figure 7 is a view of the detail B of Figures 3 and 4, in a configuration in which power is transmitted by the coupling; and
Figure 8 is the same view as in Figure 7, but in a configuration in which power is not transmitted by the coupling.

### DESCRIPTION OF THE EMBODIMENTS OF THE INVENTION

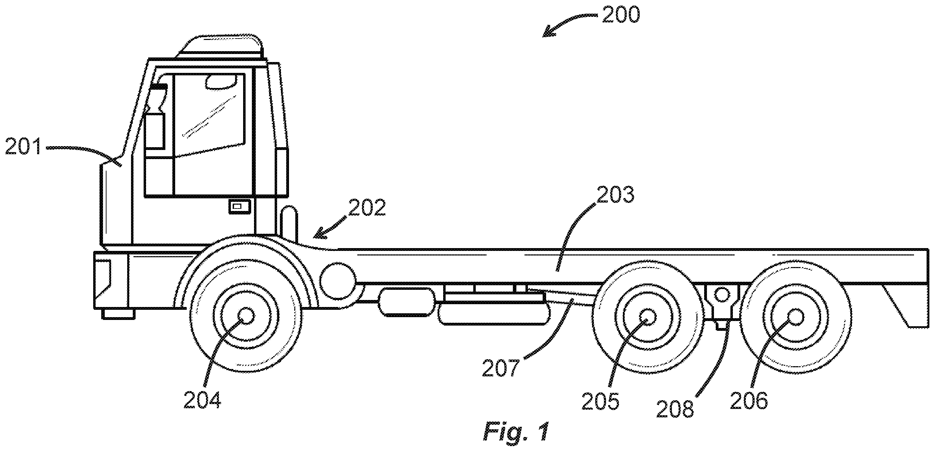

The invention will now be described in relation to its specific embodiments, making reference to the appended Figures showing examples of said embodiments. Reference numbers shown in the Figures are repeated throughout the various figures, to indicate identical or similar technical parts. Moreover, terms that may be used herein, such as: above, below, upper, lower, side, right, left, front, rear and variations thereof, must be construed according to the orientation given in Figure 1.

Figure 1 schematically shows a vehicle for transporting cargo or goods, such as a truck **200,** with a 6x4 drivetrain configuration. Consequently, the truck **200** comprises a cabin **201** for a driver, under which, a power take-off transmission system **202** is provided, such as a combustion engine associated with a gearbox, mounted on a chassis **203** that also supports a front axle **204,** a first rear axle **205** and a second rear axle **206.** From the gearbox a Cardan axis **207** extends for a first differential of the first rear axle **205** and, from the differential of the first rear axle a second Cardan axis **208** extends, for the differential of the second rear axle **206.** Generally, power is supplied evenly distributed between the first and second differentials to the wheels on the first **205** and second **206** rear axles. Consequently, the differentials transmit power to the wheels on each axle in a known manner, using a crown and pinion system and planetary gear trains, in a manner well known to the persons skilled in the art. Other details of a vehicle **200** are shown schematically, and therefore require no further explanation, as they are already known in ordinary cargo vehicles.

As mentioned above, it may be desirable for certain uses, such as for unloaded vehicles, not to transmit power from the differential of the first rear axle **205** to the differential of the second rear axle **206,** allowing the vehicle to assume a 6x2 drivetrain configuration. With this 6x2 drivetrain configuration, it is possible that the third axle **206** (or the second rear axle) is raised, in order to save fuel and decrease tire wear. The manner in which the second rear axle is raised may be achieved through ordinary known methods, such as the use of an inflatable cushion.

The invention aims to enable the selective coupling or uncoupling of the second differential of the third axle **206** (or second rear axle), in order to transform a 6x4 drivetrain configuration into a 6x2 drivetrain configuration. Naturally, this detailed description of an embodiment of the invention refers to a 6x4 and 6x2 drivetrain configuration, but naturally the invention may also be used for any drivetrain configuration in which a driven axle may be activated or disactivated, such as a 4x4/4x2 or 8x4/8x2 drivetrain configuration etc.

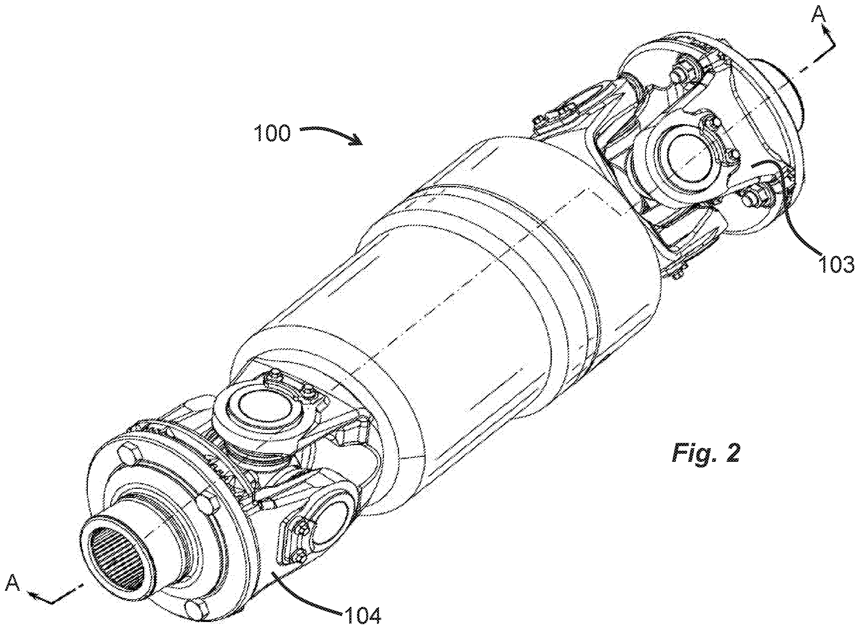

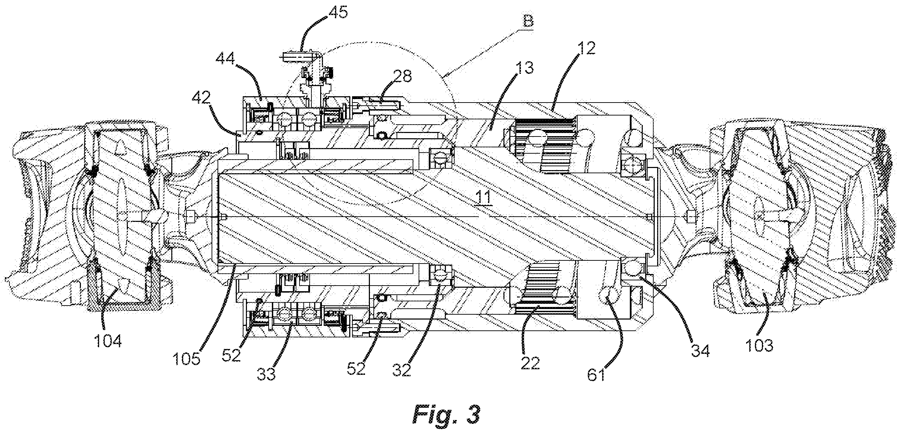

Referring now to Figure 2, a shaft coupling **100** is shown such as a Cardan axis, or instead of a Cardan axis, which is mounted between the two differentials of the driven axles **205, 206** on the vehicle **200.** In this respect, the coupling of the present invention may be mounted between two differentials of two rear axles of a goods transport vehicle which comprises, for example, a 6x4 drivetrain configuration or may even replace the intermediate Cardan axis **208.** In this manner, the coupling **100** may also comprise two spiders **103, 104,** each of which is provided at each end of the coupling and which allow the mechanical connection for transmitting power, while also allowing to compensate for variations in distance that differentials may have in respect to one another, through an assembly of two concentric toothed shafts **105** (Figure 3), as the axles **205, 206** may have different assembly heights and may also be integrally mounted on the vehicle suspension, thus being subjected to variations in height and consequently in the distance from one another, either due to the weight of the cargo on the axle or due to uneven ground surfaces. Both the spiders **103, 104** and the assembly **105,** to allow variations in length, are mechanical constructions that are well known in the prior art, and commonly used in cardan axes as they occupy very little space and have low costs. Consequently, no further details are required in this description of the configuration of the spiders **103, 104** and the assembly **105.** In alternative embodiments, the spiders **103** and **104** could be replaced by other equivalent mechanical construction elements such as homokinetic joints, depending on the torque to be transmitted. The choice among spiders, homokinetic joints or other mechanical construction elements does not affect the technical effects foreseen by the invention.

In an alternative embodiment in which the coupling is integral to the Cardan axis, such as for example, in the case of a very long Cardan axis, the spiders **103, 104** and the assembly **105** may be replaced by other fixing means, such as flanges with nuts and bolts, or even by welding.

Referring now to Figure 3, a coupling is shown in a power transmission configuration, namely a configuration in which power is transmitted by the axle through the coupling. The coupling, in this case, is mounted to replace the Cardan axis, and in particular, according to the embodiment illustrated herein, to replace the Cardan axis **208** mounted between two differentials of the driven axles **205, 206** of the vehicle.

Based on the same orientation shown in Figure 1, the coupling may be mounted between the two spiders **103, 104** instead of a conventional Cardan axis and, on the one side it comprises a first shaft segment **11** that can be mounted on a power outlet, and a second shaft segment **12** that can be mounted on a power inlet, in order to receive power coming from the first shaft segment **11.** Both the first **11** and the second **12** shaft segments can be coupled to or uncoupled from each other by means of a coupler or coupling means **13,** in order to selectively transmit, or not transmit, power from the first to the second shaft segment **11, 12,** as required.

Naturally, although it has been mentioned here that the first shaft segment **11** may be mounted on a power outlet and the second shaft segment **12** may be mounted on a power inlet, the configuration may be reversed, meaning that the first shaft segment **11** may be mounted on a power inlet and the second shaft segment **12** may be mounted on a power outlet, without any adverse affects on the technical outcome.

With regard to Figures 3 to 6, in order to allow the coupling, in an exemplificative embodiment, the first shaft segment **11** can comprise a toothed profile, with teeth projecting radially along its outer perimeter and along at least part of its length. On the one side, the portion of shaft segment **11** which is integrally coupled to the assembly **105,** the teeth **106** project radially along the outer perimeter of the portion of the shaft segment **11** and in appropriate quantities and sizes, as is needed, to smoothly mesh and co-operate with the inner teeth of the assembly **105.** As mentioned above, the assembly **105** is a common solution used for Cardan axes and has no direct effect on the invention, as this assembly is intended to enable variations in length, to which Cardan axes may be subjected. On the other hand, the shaft segment **11** has a second toothed region **21,** generally with a larger diameter also with a set of toothed gears arranged along its outer perimeter, which is intended to co-operate with a coupler or coupling means **13,** as will be explained more clearly in this specification.

With regard to Figures 3 to 6, the second shaft segment **12** is also a toothed axle, but comprises teeth **22** that radially project along its inner perimeter. In this manner, the second shaft segment **12** is a hollow cup-shaped axle that is open on one side and closed on the other, and comprising a plurality of teeth **22** radially arranged along its inner perimeter and extending, at least partially, along its inner length of the hollow body of the second shaft segment **12.** On the side of the second shaft segment, an assembly **105** must be provided, in order to compensate for the differences in length of the Cardan axis. Alternatively, the assembly **105** may be provided on the side of the second shaft segment **12** rather than on the side of the first shaft segment **11.**

A coupler or a coupling means **13** is provided between the first shaft segment **11** and the second shaft segment **12.** The coupler or coupling means **13** can be any means that allow a selective coupling between the first **11** and the second **12** shaft segments, which enables power to be transmitted, or not to be transmitted, between the two shaft segments. Among suitable couplers or coupling means we may include a multiple disk-clutch, a magnetic coupling, a mechanical coupling etc., without being limited thereto, meaning any appropriate coupling means that allows power to be selectively transmitted between the two shaft segments **11, 12.**

In a particular embodiment of the invention illustrated herein, the coupler or the coupling means may consist in a sleeve **13** that comprises a plurality of teeth on both its inner and outer perimeters, wherein the teeth provided on its outer perimeter **24** are intended to mesh and co-operate with the teeth **22** provided on the inner perimeter of the second shaft segment **12,** and the teeth provided on its inner perimeter **23** are intended to mesh and co-operate with the teeth provided on the outer perimeter **21** of the first shaft segment **11.** A sleeve may slide between two positions and, more particularly, slide inside the second shaft segment **12** in order to mesh with or unmesh from the teeth **21** of the first shaft segment **11,** as will be explained more clearly in the following description. Consequently, the first shaft segment **11** may be mounted concentrically on the second shaft segment **12** and on the sleeve **13,** in order to allow the sleeve **13** to slide.

The number of teeth **21** on the first shaft segment **11** may vary and may be defined according to the design specifications, such as those defined by the torque to be transmitted. Typically, an appropriate number of teeth ranging between 18 and 30 teeth, and in particular 24 teeth, may be adequate. In the same way the number of teeth **22** provided on the second shaft segment **12** may therefore vary and may be defined according to design specifications, and may range between 45 and 60 teeth, in particular 52 teeth. The sleeve **13** must comprise an appropriate number of teeth on both its outer and inner parameters, so that the teeth **21** on the first shaft segment **11** and the teeth **22** on the second shaft segment **12** can integrally mesh.

In the configuration shown in Figure 3, power is transmitted from the first shaft segment **11** to the coupling means **13** that, in turn, transmits power to the second shaft segment **12** through the meshing of the teeth **21** of the first shaft segment **11** with the inner teeth **23** of the sleeve **13,** and through the outer teeth of the sleeve **24** with the teeth **22** on the second shaft segment **12.** Naturally, the logic is the same for a reversed reference, meaning that power may be transmitted from the second shaft segment **12** through the coupler or coupling means **13** to the first shaft segment **11.**

Furthermore, although the second shaft segment **12** is hollow, there is no reason why the first shaft segment **11** should not be hollow as well, as this mechanical construction configuration generally ensures greater resistance to torsion, provided that, according to this exemplificative embodiment of the invention, the diameter of the first shaft segment **11** is smaller than the diameter of the second shaft segment **12** and that the coupling means **13** form a coupling interface between the two shaft segments.

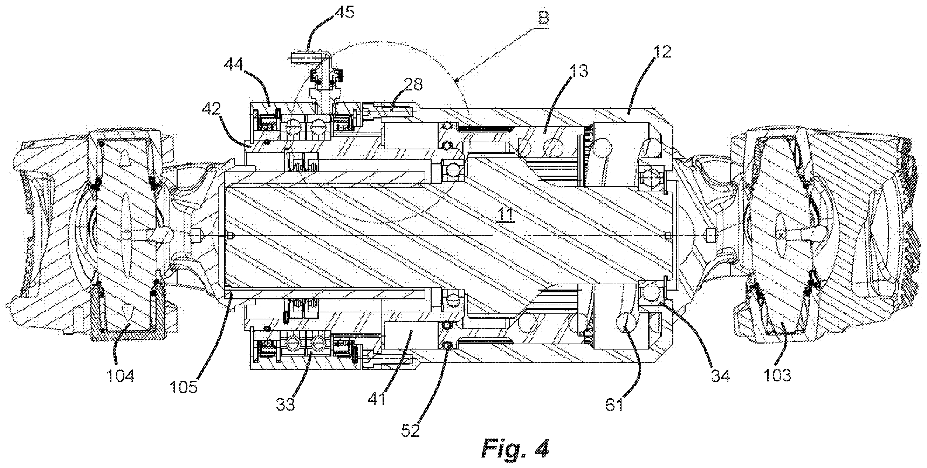

Figure 4 shows the coupling of Figure 3, in a configuration through which power is not transmitted between shaft segments **11, 12** and therefore, as shown in this representation, the sleeve **13** is axially displaced to a second position in which there is no connection between the first shaft segment **11** and the inner teeth **22** of the sleeve **13.**

In order to allow the axial displacement of the sleeve **13** used in this embodiment as a coupler or coupling means, any type of appropriate means may be used, such as mechanical, magnetic, electrical, hydraulic means etc., but without being limited thereto, ultimately any appropriate means that allow the sleeve **13** to slide between at least two positions, and thus its coupling to or uncoupling from the first shaft segment **11.**

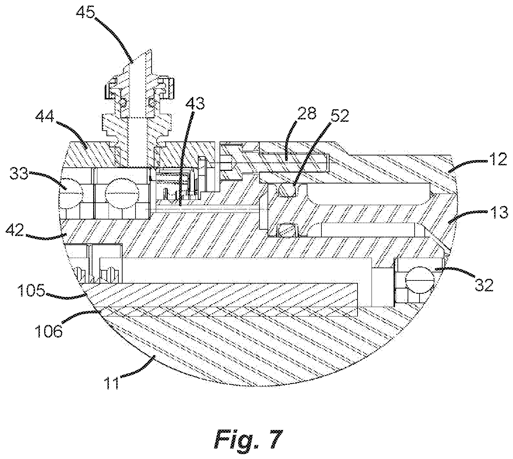

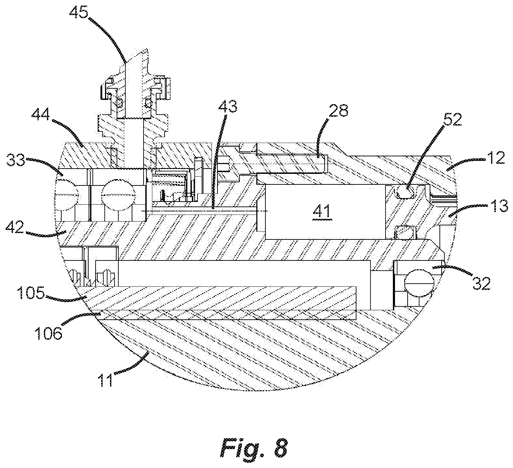

According to this embodiment, compressed air is used. Using compressed air as a means for allowing the sleeve **13** to slide is appropriate considering it can use the compressed air line already in place on most commercial vehicles. Therefore, a chamber **41** may be provided, which is shown in greater detail in Figures 7 and 8, consisting on the one hand, of a jacket **42** provided between the outer perimeter of the first shaft segment **11** and the inner wall of the second shaft segment **12.** The jacket **42** may be fixed to the second shaft segment **12,** and in this manner the jacket **42** and the second shaft segment **12** can comprise a flange **15, 15'** associated with fixing bolts **28.** The number of bolts used may vary, depending on the design specifications, and may range from 10 to 16 bolts, particularly 12 bolts. The inner wall of the second shaft segment **12** closes the chamber **41** on the top side.

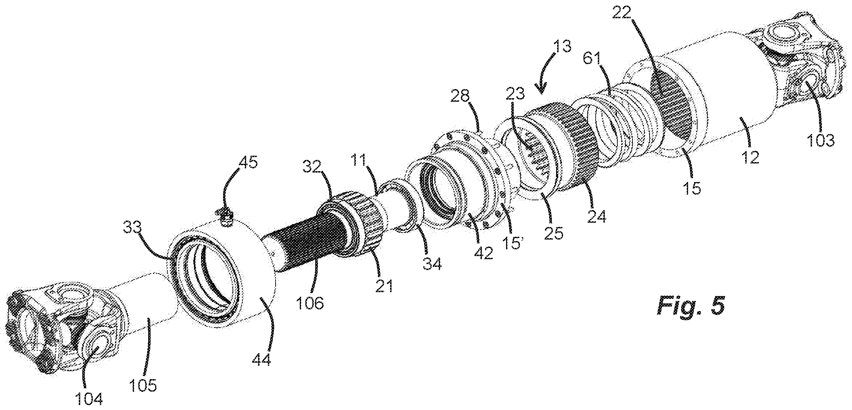

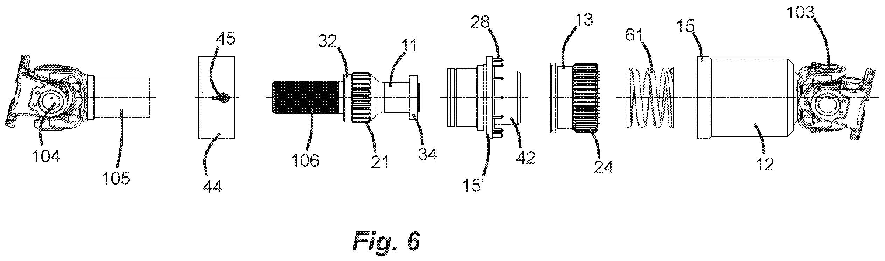

As may be noted in Figures 5 and 6, the sleeve **13** can comprise an abutment **25** which can serve as a wall that slides inside the chamber **41.** The chamber may be fluidly connected to a pressure source such as a compressed air line usually in cargo or goods vehicles, and for this purpose a cover **44** may be used that, on the one side, comprises a compressed air inlet **45** that is in fluidic communication with the compressed air line of the vehicle and, on the other side, extends in fluidic communication with a channel **43** formed in the jacket **42** and which, in turn, allows fluidic communication with the inside of the chamber **41.** Consequently, the channel **43** forms a fluidic connection between the inside of the chamber **41** and the compressed air line (not shown) of the vehicle, whereby the pressure inside the chamber may be varied by means of the injection or ejection of air, and therefore the sleeve **13** may be shifted from a first position, wherein, it is coupled to both the first shaft segment **11** and to the second shaft segment **12,** and wherein the pressure inside the chamber is approximately equal to the environmental pressure, and a second unconnected position, wherein the sleeve **13** is not coupled with the first shaft segment **11,** and wherein the pressure in the chamber is higher than the environmental pressure.

The jacket **42** is integrally fixed to the second shaft segment **12,** therefore it can rotate, while the cover **44** is preferably mounted in a static manner, in order to allow the connection **45** with the compressed air line. To this purpose, one or more roller bearings **33** may be provided in order to allow the sliding rotation of the jacket **42** in respect to the cover **44.** Furthermore, other roller bearings **32, 34** may be provided for the abutment of the first shaft segment **11,** to allow the rotation of one shaft segment in respect to the other, in a configuration through which the sleeve **13** is uncoupled and, in this case, one shaft segment rotates while the other remains idle, as may be understood by persons skilled in the art. Naturally, the roller bearings described here may be replaced by other equivalent mechanical construction elements such as bearings. Such roller bearings may also be any appropriate type of bearing, such as ball bearings, needle rollers, cylindrical rollers etc.

Naturally, although this present description refers to the use of compressed air in order to vary the pressure inside the chamber **41,** other means may also be provided, such as fluids like oil or water, or magnetic or electromechanical means, such as solenoid valves. Furthermore, although said sleeve **13** is in the coupled position when the pressure in the chamber is approximately equal to the environmental pressure, said embodiment may naturally be reversed, whereby the sleeve is in the coupled position only when the pressure in the chamber is increased, although this is less preferable due to operating safety issues. Nevertheless, although this specification refers to "environmental pressure" and "higher pressure" than the environmental pressure, other pressure differentials may naturally be used that are not necessarily based on environmental pressure as reference pressure, but also higher pressures or even negative pressures using vacuum, provided that there is sufficient pressure differential in the chamber **41** to ensure that the sleeve **13** slides with an axial movement as set forth in this embodiment.

In order to ensure that the chamber is sealed, one or more sealing means may be used, such as elastomer O-rings **52,** if mounted on the abutment **25** of the sleeve **13,** according to Figures 3 to 6, or at other points on the coupling assembly **100.**

In order to ensure that the coupler or coupling means **13** returns when the pressure drops in the chamber **41,** and also in order to prevent the coupling means from exiting from a coupled position to an uncoupled position, the return means, such as a coil spring **61,** may be provided in order to ensure that the coupling means or coupler remain in a pre-determined position, such as the standard coupled position, as shown in the drawings, or otherwise, in a standard uncoupled position. Naturally, the return means may be suppressed if other means for moving the coupling means **13** are used, such as magnetic or electromechanical means. However, other return means may also be provided, such as magnetic, mechanical, hydraulic means, etc.

In this embodiment, the spring may be mounted inside the second shaft segment **12,** in contact on one side with the coupling means **13** on the side opposite to the abutment **25,** and, on the other side, abutting against the inner wall of the second shaft segment **12** on the side of the connection with the spider **103.** The spring **61** is thus compressed and extended as the sleeve **13** moves axially in the second shaft segment **12,** due to the pressure exerted by the chamber **41** on the sleeve **13.** Consequently, the pressure must be sufficient to change the position of the sleeve **13** as well as allowing the compression of the spring **61.** A sufficient work pressure may be approximately 2 bars, and may even reach 4 bars, although the pressure should not be very high in order to avoid damaging the sealing means **52.** The spring used and its spring constant, may also be defined by design specifications and may be, for example, a spring constant value **k** ranging between 40 and 70 N/mm, or approximately 50 N/mm.

The entire assembly may include or receive lubrication, either a static lubrication which is stored inside the coupling **100,** or a dynamic lubrication wherein the lubricant circulates inside the coupling **100** by means of specific hydraulic lines intended for this purpose.

When in operation, and as is apparent from the above description, when the 6x4 drivetrain configuration is desired, as shown in this example, the sleeve **13** is connected to both the first **11** and second **12** shaft segments, whereby the power (torque and rotation) is thus transmitted from the first shaft segment **11** to the second shaft segment **12** through the sleeve **13.** On the other hand, if the goods transport vehicle is unloaded, there is no need to drive both axles, and a 6x2 drivetrain configuration may be adopted. Thus, through a command, such as a valve (not shown) air may be allowed to flow under pressure through the inlet **45** along the channel **43** and into the chamber **41.** When receiving pressure, the volume of the chamber will expand, moving the sleeve **13** axially along the inside of the second shaft segment **12** to a position wherein the inner teeth **23** unmesh from the teeth **21** of the first shaft segment, thus pressing the spring **61.** As soon as a pre-determined pressure is reached, this pressure may be maintained inside the chamber by the valve (not shown) in order to ensure that the coupling means **13** reaches a specific position in which the teeth **21, 23** are no longer coupled and, if a pressure drop occurs, the compressed air line may supply the pressure needed to ensure that the coupling means does not return. In this manner, the driving power is no longer transmitted to the second shaft segment that, in this configuration, is associated with the differential, and thereafter the vehicle then operates with a type of drivetrain configuration known as 6x2. Moreover, if desired the axle that is no longer driven may be raised, in order to prevent the tires from coming into contact with the ground, according to solutions that are already known.

When returning to a 6x4 configuration, it is sufficient to release the pressure in the chamber **41,** whereby the force exerted by the spring **61** will ensure that the sleeve **13** returns to a coupled position between the first **11** and second **12** shaft segments.

More specifically, the coupling and uncoupling of the coupler or the coupling means **13** must take place when the vehicle is halted, meaning when the coupling is not rotating, even though it is not preferable, nothing prevents such coupling and/or uncoupling from taking place while the vehicle is moving.

Although this specification describes a coupling 100, it is clear that the coupling consists of several mechanical construction elements, whereby the coupling **100** may also be called a set or assembly for a coupling operation.

Although the invention is described in terms of its specific embodiments, persons skilled in the art may introduce many changes or variations through the teachings disclosed herein, without departing from the scope of the invention as defined in the appended set of claims.

## Claims

1. A shaft coupling (100) comprising:
- a first shaft segment (11) and a second shaft segment (12),
said second shaft segment (12) being hollow and said first shaft segment (11) being concentric to and mounted within said second shaft segment (12),
said second shaft segment (12) comprising a plurality of inner teeth (22) distributed, at least partially, along its inner perimeter and said first shaft segment (11) comprises a plurality of outer teeth (21) distributed, at least partially, along its outer perimeter;
- coupling means (13) for coupling said first shaft segment (11) to said second shaft segment (12);
said coupling means (13) coupling or uncoupling the first shaft segment (11) to/from the second shaft segment (12), to selectively transmit power from one segment to the other, said coupling means (13) comprising a plurality of inner and outer teeth distributed, at least partially, along its inner and outer perimeters respectively, and that mesh with said plurality of teeth (21,22) of said first and second shaft segments (11, 12);
**characterized in that** said coupling means (13) is associated with a pressure chamber (41) that allows said coupling means (13) to axially slide along said first and said second shaft segments (11, 12) as the pressure varies in the chamber (41),
wherein the pressure chamber is formed by a jacket (42) mounted between the first and second shaft segments (11,12), whereby the pressure chamber (41) is formed between the inner wall of the second shaft segment (12) and the jacket (42).

2. The coupling according to claim 1, **characterized in that** said coupling means (13) additionally comprises return means for said coupling means (13).

3. The coupling according to claims 1 or 2, **characterized in that** the return means is a spring (61) mounted within said second shaft segment (12) and abutting, on one side, against said second shaft segment (12) and on the other side against the chamber (41).

4. A vehicle (200) that comprises at least two driven axles (207, 208), the power being transmitted from the first axle to the second axle by a shaft, **characterized in that** it comprises a shaft coupling (100) as defined in any one of Claims 1 to 3.

5. The vehicle according to Claim 4, comprising a goods transport vehicle with a 6x4 drivetrain configuration.

## Patentansprüche

1. Wellenkupplung (100), umfassend:
- ein erstes Wellensegment (11) und ein zweites Wellensegment (12),
welches zweite Wellensegment (12) hohl ist und welches erste Wellensegment (11) konzentrisch zum zweiten Wellensegment (12) ist und darin installiert ist,
wobei das zweite Wellensegment (12) eine Mehrzahl innerer Zähne (22) aufweist, welche zumindest teilweise entlang seines inneren Umfangs verteilt sind, und welches erste Wellensegment (11) eine Anzahl äußerer Zähne (21) umfasst, welche zumindest teilweise entlang seines äußeren Umfangs verteilt sind;
- Kupplungsmittel (13) zur Kupplung des ersten Wellensegments (11) an das zweite Wellensegment (12);
welche Kupplungsmittel (13) das erste Wellensegment (11) an das zweite Wellensegment (12) koppeln / von diesem entkoppeln, um selektiv Leistung von einem Segment zum anderen zu übertragen, welche Kupplungsmittel (13) eine Mehrzahl innerer und äußerer Zähne umfassen, die zumindest teilweise entlang seiner inneren und äußeren Umfänge verteilt sind, und welche die Mehrzahl von Zähnen (21,22) der ersten und zweiten Wellensegmente (11,12) kämmen;
**dadurch gekennzeichnet, dass** die Kupplungsmittel (13) einer Druckkammer (41) zugeordnet sind, welche es erlaubt, dass Kupplungsmittel (13) axial entlang der ersten und zweiten Wellensegmente (11,12) gleiten, wenn der Druck in der Kammer (41) sich verändert,
wobei die Druckkammer durch eine Manschette (42) gebildet ist, die zwischen den ersten und zweiten Wellensegmenten (11,12) montiert ist, wobei die Druckkammer (41) zwischen der Innenwand des zweiten Wellensegments (12) und der Manschette (42) ausgebildet ist.

2. Kupplung gemäß Anspruch 1, **dadurch gekennzeichnet, dass** die Kupplungsmittel (13) ferner Rückstellmittel für die Kupplungsmittel (13) umfassen.

3. Kupplung gemäß Anspruch 1 oder 2, **dadurch gekennzeichnet, dass** die Rückstellmittel eine Feder (61) sind, die in dem zweiten Wellensegment (12) installiert ist und auf einer Seite an dem zweiten Wellensegment (12) anschlägt und auf der anderen Seite an der Kammer (41).

4. Fahrzeug (200), umfassend zumindest zwei angetriebene Achsen (207,208), wobei die Leistung von der ersten Achse zur zweiten Achse durch eine Welle übertragen wird, **dadurch gekennzeichnet, dass** es eine Wellenkupplung (100) gemäß einem der Ansprüche 1 bis 3 umfasst.

5. Fahrzeug gemäß Anspruch 4, umfassend ein Gütertransportfahrzeug mit einer 6x4-Antriebsstrangkonfiguration.

## Revendications

1. Accouplement d'arbre (100) comprenant :
- un premier segment d'arbre (11) et un second segment d'arbre (12),
ledit second segment d'arbre (12) étant creux et ledit premier segment d'arbre (11) étant concentrique à et monté à l'intérieur dudit second segment d'arbre (12),
ledit second segment d'arbre (12) comprenant une pluralité de dents internes (22) réparties, au moins partiellement, le long de son périmètre interne et ledit premier segment d'arbre (11) comprend une pluralité de dents externes (21) réparties, au moins partiellement, le long de son périmètre externe ;
- un moyen d'accouplement (13) pour coupler ledit premier segment d'arbre (11) audit second segment d'arbre (12) ;
ledit moyen d'accouplement (13) couplant ou découplant ledit premier segment d'arbre (11) à / du second segment d'arbre (12), afin de transmettre sélectivement la puissance d'un segment à l'autre, ledit moyen d'accouplement (13) comprenant une pluralité de dents internes et externes réparties, au moins partiellement, le long de ses périmètres interne et externe respectivement, et qui s'engrènent avec ladite pluralité de dents (21, 22) desdits premier et second segments d'arbre (11, 12) ;
**caractérisé en ce que** ledit moyen d'accouplement (13) est associé avec une chambre de pression (41) qui permet audit moyen d'accouplement (13) de coulisser axialement le long desdits premier et second segments d'arbre (11, 12) lorsque la pression varie dans la chambre (41),
dans lequel la chambre de pression est formée par une chemise (42) montée entre les premier et second segments d'arbre (11, 12), moyennant quoi la chambre de pression (41) est formée entre la paroi interne du second segment d'arbre (12) et la chemise (42).

2. Accouplement selon la revendication 1, **caractérisé en ce que** ledit moyen d'accouplement (13) comprend de plus un moyen de retour pour ledit moyen d'accouplement (13).

3. Accouplement selon les revendications 1 ou 2, **caractérisé en ce que** le moyen de retour est un ressort (61) monté à l'intérieur dudit second segment d'arbre (12) et venant en butée, sur un côté, contre ledit second segment d'arbre (12) et de l'autre côté contre la chambre (41) .

4. Véhicule (200) qui comprend au moins deux essieux entraînés (207, 208), la puissance étant transmise du premier au second essieu par un arbre, **caractérisé en ce qu'**il comprend un accouplement d'arbre (100) selon l'une quelconque des revendications 1 à 3.

5. Véhicule selon la revendication 4, comprenant un véhicule de transport de marchandises avec une configuration de transmission 6x4.
